(19) Europäisches Patentamt / European Patent Office / Office européen des brevets

(11) **EP 3 318 501 B1**

(12) **EUROPEAN PATENT SPECIFICATION**

(45) Date of publication and mention
of the grant of the patent:
**20.05.2020 Bulletin 2020/21**

(21) Application number: **16818039.6**

(22) Date of filing: **30.06.2016**

(51) Int Cl.:
**B65D 1/28** *(2006.01)*     **B32B 27/36** *(2006.01)*
**B65D 65/40** *(2006.01)*    **B65D 81/24** *(2006.01)*
**B32B 27/08** *(2006.01)*    **B32B 27/34** *(2006.01)*
**B32B 1/02** *(2006.01)*

(86) International application number:
**PCT/JP2016/069480**

(87) International publication number:
**WO 2017/002931 (05.01.2017 Gazette 2017/01)**

(54) **CUP-TYPE MULTILAYERED CONTAINER**

SCHALENFÖRMIGER MEHRSCHICHTIGER BEHÄLTER

RÉCIPIENT MULTICOUCHE DE TYPE TASSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2015 JP 2015133291**

(43) Date of publication of application:
**09.05.2018 Bulletin 2018/19**

(73) Proprietor: **Toyo Seikan Group Holdings, Ltd.
Shinagawa-ku
Tokyo 141-8627 (JP)**

(72) Inventors:
• **HIRAYAMA, Yukiko**
  **Yokohama-shi**
  **Kanagawa 240-0062 (JP)**
• **YAMADA, Toshiki**
  **Yokohama-shi**
  **Kanagawa 240-0062 (JP)**
• **ISHIHARA, Takayuki**
  **Yokohama-shi**
  **Kanagawa 240-0062 (JP)**
• **TASHIRO, Yuuki**
  **Yokohama-shi**
  **Kanagawa 240-0062 (JP)**

(74) Representative: **J A Kemp LLP
14 South Square
Gray's Inn
London WC1R 5JJ (GB)**

(56) References cited:
WO-A1-2005/014409    WO-A1-2005/014409
WO-A1-2015/111690    JP-A- H08 258 830
JP-A- 2004 131 723    JP-A- 2008 543 610
JP-A- 2012 171 155    JP-A- 2013 028 363
JP-A- 2013 028 363    JP-A- 2014 101 133

**Description**

Technical Field:

This invention relates to a multilayered container comprising a polyester resin and, more specifically, to a cup-type multilayered container excellent in gas-barrier property, interlayer adhesiveness and transparency.

Background Art:

Polyester resins as represented by polyethylene terephthalates have excellent properties such as formability, transparency, mechanical strength and resistance against chemicals and have, therefore, been widely used in the field of packing containers. In order to improve gas-barrier property of the containers comprising the polyester resin against oxygen and the like gases, there have been proposed packing materials of a multilayered structure forming, as an intermediate layer, a layer of a saponified product of an ethylene-vinyl acetate copolymer or of a polyamide between the inner layer and the outer layer of a polyester resin. In order to further improve the gas-barrier property of the packing material of the above multilayered structure, there has, further, been proposed to blend the intermediate layer with clay (patent document 1).

In the packing material of this multilayered structure, if the polyamide resin is used as the intermediate layer, peeling occurs among the layers since the adhesiveness becomes poor between the polyamide resin and the polyester resin forming the inner and outer layers . So far, therefore, it was necessary to interpose the layers of an adhesive resin among the layers. In order to solve the above problem, therefore, there has heretofore been proposed to use, as the intermediate layer, a resin composition of a blend of a polyester resin and a polyamide resin or a blend of a polyester resin and a clay-containing polyamide resin (patent documents 2 and 3).

However, when there is used, as the intermediate layer, a resin composition of a blend of the polyester resin and the polyamide resin and, specifically, an aromatic polyamide resin such as polymetaxyleneadipamide (MDX6) which has particularly excellent gas-barrier property among the polyamide resins, there occurs a problem in that excellent transparency possessed by the polyester resin is impaired.

As means for improving transparency of the blend of the polyester resin and the polyamide resin, the following patent document 4 discloses a transparent polymer blend which is a polymer composition containing an immiscible blend of a first component of a specific copolymerized polyester resin and a second component which is a specific amide-exchange blend, a difference in the refractive index being adjusted between the first component and the second component.

Prior Art Documents:

Patent Documents:

Patent document 1: JP-A-2004-142444
Patent document 2: JP-A-2005-59859
Patent document 3: International Publication WO2010/035654
Patent document 4: Japanese Patent No. 5296385

Outline of the Invention:

Problems that the Invention is to Solve:

The blend of the polyester resin and the polyamide resin whose refractive indexes are adjusted to be in agreement described in the above patent document 4 may have improved transparency. Even if a cup-shaped container (hereinafter often referred to as cup-type container") is obtained by heat-forming a sheet of the above blend, however, it does not mean that excellent transparency is also realized. Namely, through the above forming method, the sheet of a portion corresponding to at least the side surface of the cup-type container is stretched in the axial direction. The refractive indexes of the resins vary due to the stretching and also depending on their crystallinities. After the heat-forming, therefore, the refractive indexes of the resins do not necessarily come into agreement, and the container after it is heat-formed cannot maintain satisfactory transparency.

It is, therefore, an object of the present invention to provide a cup-type multilayered container having a multilayered structure that includes inner and outer layers of a polyester resin and an intermediate layer of a blend of a polyester resin and an aromatic polyamide resin, fulfilling all of excellent transparency, gas-barrier property and interlayer adhesiveness.

Means for Solving the Problems:

According to the present invention, there is provided a multilayered container obtainable by heat-forming a multilayered sheet or a multilayered preform (hereinafter generally referred to as "multilayered precursor") that includes inner and outer layers of an ethylene terephthalate type polyester resin, and at least one intermediate layer of at least a lowly crystalline ethylene terephthalate type polyester resin and a gas-barrier aromatic polyamide resin, wherein a difference of refractive index (ΔRI) between the lowly crystalline ethylene terephthalate type polyester resin and the gas-barrier aromatic polyamide resin represented by the following formula (1),

$$\triangle RI = \left| RI_E - RI_A \right| \qquad\qquad (1)$$

wherein $RI_E$ and $RI_A$ are refractive indexes of injection-formed plates made, respectively, from the lowly crystalline ethylene terephthalate type polyester resin and the gas-barrier aromatic polyamide resin after they have been monoaxially stretched into 3 times,
is not more than 0.03, a haze in a side surface of the container is not more than 5%, the lowly crystalline ethylene terephthalate type polyester resin is an ethylene terephthalate type polyester resin that contains 7.5 to 15 mol% of isophthalic acid in its dicarboxylic acid component or 15 to 30 mol% of cyclohexanedimethanol in its diol component, and the multilayered container is obtainable by heat-forming the multilayered precursor such that a drawing ratio H/D (H: height of a container, D: diameter of a opening of the container) is not less than 1.0.

Effects of the Invention:

In the multilayered container of the present invention, as the polyester resin for forming the intermediate layer that serves as a matrix for being blended with the gas-barrier aromatic polyamide resin, there is selected a lowly crystalline polyester resin which, after it is stretch-formed, assumes a refractive index close to that of the aromatic polyamide resin and of which the difference of refractive index as represented by the above formula (1) lies within the above-mentioned range. This enables the container to assume a haze of not more than 5% on the side surface of the container yet maintaining excellent transparency.
By forming the inner and outer layers using the crystalline ethylene terephthalate type polyester resin, further, it is allowed to evenly stretch the intermediate layer that is formed by using the lowly crystalline polyester resin that has poor stretching property. Thus there is provided a cup-type multilayered container having excellent mechanical strength.
Upon forming the intermediate layer using the polyester resin as a matrix resin, further, excellent interlayer adhesiveness is attained among the inner layer, the outer layer and the intermediate layer; i.e., interlayer peeling is prevented even in an event of having received the shocks due to falling or the like.
Further, the refractive indexes of the lowly crystalline polyester resin and of the aromatic polyamide resin become close to each other if the blend of the lowly crystalline polyester resin and the aromatic polyamide resin is stretched to a predetermined number of times, the blend being used for forming the intermediate layer of the multilayered container of the present invention. In the present invention, however, before the step of stretch-forming, the lowly crystalline polyester resin and the aromatic polyamide resin have not been adjusted for their refractive indexes. Before the step of stretch-forming, therefore, there is a large difference in their refractive indexes. As a result, the multilayered precursor of before being stretch-formed is opaque if the haze is not less than 5% in the portion where the multilayered structure is formed, and the portion where the intermediate layer is formed becomes legible.

Brief Description of the Drawings:

[Fig. 1] It is a view illustrating a multilayered container of the present invention and a portion thereof in cross section.
[Fig. 2] It is a view illustrating another sectional structure of the multilayered container of the present invention.
[Fig. 3] it is a view illustrating a method of producing the multilayered container of the present invention.

Modes for Carrying Out the Invention:

(Multilayered container)

According to the present invention as described above, as the polyester resin and the gas-barrier aromatic polyamide type resin for forming the intermediate layer, there are selectively used in combination a lowly crystalline ethylene terephthalate type polyester resin (hereinafter often referred to as "lowly crystalline PET resin") and a gas-barrier aromatic polyamide type resin (hereinafter often referred to as "barrier polyamide resin"), the difference of refractive index between them represented by the above-mentioned formula (1) being in a range of not more than 0.03 and, specifically, not more than 0.026. Namely, it was discovered that when a multilayered precursor having the intermediate layer comprising the lowly crystalline PET and the barrier polyamide resin is heat-formed, there is obtained a cup-type multilayered container having a haze of not more than 5% in the side surface thereof realizing excellent transparency.

The stretching condition represented by the above formula (1) is in agreement with the stretching condition at the time of forming the cup-type multilayered container relying on the heat forming such as plug assist forming. Examples appearing later are demonstrating that if the difference in the refractive index as measured from the samples prepared under the above stretching condition is within the above range, then the cup-type multilayered container has a haze that is not more than 5%.

(Inner and outer layers)

The ethylene terephthalate type polyester resin (hereinafter often referred to as "PET resin") used for forming the inner and outer layers of the present invention is a polyester resin of which not less than 50 mol% and, specifically, not less than 80 mol% of the dicarboxylic acid component is a terephthalic acid, and of which not less than 50 mol% and, specifically, not less than 80 mol% of the diol component is an ethylene glycol. The above PET resin have excellent mechanical and thermal properties as well as excellent stretching property enabling, therefore, the intermediate layer, too, to be uniformly stretched at the time of stretch-forming.

The PET resin can contain copolymerizable components other than the terephthalic acid and ethylene glycol.

As the carboxylic acid components other than the terephthalic acid, there can be exemplified isophthalic acid, naphthalenedicarboxylic acid, p-$\beta$-oxyethoxybenzoic acid, biphenyl-4,4'-dicarboylic acid, diphenoxyethane-4,4'-dicarboxylic acid, 5-sodiumsulfoisophthalic acid, hexahydroterephthalic acid, adipic acid and sebacic acid.

As the diol components other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

Further, the dicarboxylic acid components and diol components may include trifunctional or more highly functional polybasic acids and polyhydric alcohols. For instance, there can be exemplified such polybasic acids as trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentanetetracarboxylic acid and biphenyl-3,4,3',4'-tetracarboxylic acid, and such polyhydric alcohols as pentaerythritol, glycerol, trimethylolpropane, 1,2,6-hexanetriol, sorbitol, and 1,1,4,4-tetrakis(hydroxymethyl) cyclohexane.

It is desired that the PET resin used for forming the inner and outer layers of the cup-type container of the invention has an intrinsic viscosity in a range of 0.60 to 1.40 dL/g as measured by using a mixed solvent of phenol and tetrachloroethane at a weight ratio of 1:1 at temperature of 30°C. It is, further, desired that the PET resin has a melting point (Tm) of 200 to 275°C to improve heat resistance and workability of the multilayered containers. It is desired that it also has a glass transition point of not lower than 30°C and, specifically, in a range of 50 to 120°C.

The PET resin used for forming the inner and outer layers of the invention can be blended with blending agents for resins known per se ., such as coloring agent, antioxidant, stabilizer, various kinds of antistatic agents, parting agent, lubricant and nucleating agent within ranges in which they do not impair the quality of the finally formed articles according to known recipes.

(Intermediate layer)

The intermediate layer of the cup-type multilayered container of the present invention comprises at least a lowly crystalline PET resin and a barrier polyamide resin. Here, an important feature is that a difference of refractive index between these resins represented by the above formula (1) is in a range that is not larger than 0.03.

In the invention, further, the lowly crystalline PET resin and the barrier polyamide resin that constitute the intermediate layer are added at a weight ratio of 95:5 to 50:50 and, specifically, at a weight ratio of 90:10 to 50:50 if interlayer adhesiveness is required. This makes it possible to form an islands-sea dispersion structure in which a plurality of dispersion phases of barrier polyamide resin are present in a continuous phase of the lowly crystalline PET resin. If the amount of the barrier polyamide resin is smaller than the above range, the gas-barrier property is not obtained as desired. If the amount of the barrier polyamide resin is larger than the above range, on the other hand, there is formed an islands-sea dispersion structure in which a plurality of dispersion phases of the lowly crystalline PET resin are present in a continuous phase of the barrier polyamide resin. Therefore, interlayer adhesiveness may be impaired. In this case, however, the intermediate layer exhibits a particularly high degree of gas-barrier property since the continuous phase is comprised of the barrier polyamide resin. In this case, therefore, it is desired that the intermediate layer is constituted by using the lowly crystalline PET resin and the barrier polyamide resin at a weight ratio of 5:95 to 50:50 and, specifically, 10:90 to 50:50.

[Lowly crystalline PET resin]

The lowly crystalline PET resin that constitutes the intermediate layer of the present invention ensures adhesiveness to the PET resin that constitutes the inner and outer layers, improves interlayer adhesiveness, has a refractive index in a range of 1.56 to 1.58 before it is stretched, has a refractive index in a range of 1.58 to 1.62 after it is stretched under the condition of the above-mentioned formula (1), i.e., has a refractive index close to that of a barrier polyamide resin after it is stretched as will be described later and, therefore, does not impair the transparency of the cup-type multilayered container.

That is, the PET resin that is, usually, used for being stretch-formed is a crystalline polyester resin that imparts mechanical strength and heat resistance to the containers. If stretched, however, the crystalline polyester resin is oriented and is crystallized to an increased degree. Therefore, its refractive index changes to a large extent depending on the stretching. If used in combination with the barrier polyamide resin, therefore, a difference in the refractive index increases between them causing the transparency to be impaired. Among the PET resins, therefore, the present invention uses a lowly crystalline PET resin that causes a little increase in the refractive index when it is stretched.

In the specification, the words "lowly crystalline" PET resin stand for the one which, when heated at a rate of 10°C /min. in the differential scanning calorimetry (DSC), exhibits no peak in the crystal fusion or, if it exhibits a peak in the crystal fusion, has a quantity of heat of crystal fusion ($\Delta$ Hm) that corresponds to the peak in the crystal fusion of not more than 40 J/g.

As the lowly crystalline PET resin, there can be, desirably, used a PET resin comprising 7.5 to 15 mol% of isophthalic acid and the remainder of terephthalic acid per 100 mol% of the whole dicarboxylic acid components, or a PET resin comprising 15 to 30 mol% of 1,4-cyclohexanedimethanol and the remainder of ethylene glycol per 100 mol% of the whole diol components.

Further, the lowly crystalline PET resin can contain copolymerizable components other than those mentioned above in amounts in a range in which they will not impair the desired low crystallinity of the lowly crystalline PET resin.

As the carboxylic acid components other than the terephthalic acid, there can be exemplified isophthalic acid, naphthalenedicarboxylic acid, p-$\beta$-oxyethoxybenzoic acid, biphenyl-4,4'-dicarboxylic acid, diphenoxyethane-4,4'-dicarboxylic acid, 5-sodiumsulfoisophthalic acid, hexahydroterephthalic acid, adipic acid and sebacic acid.

As the diol components other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

The above dicarboxylic acid components and diol components may include trifunctional or more highly functional polybasic acids and polyhydric alcohols. Their examples include polybasic acids such as trimellitic acid, pyromellitic acid, hemimellitic acid, 1,1,2,2-ethanetetracarboxylic acid, 1,1,2-ethanetricarboxylic acid, 1,3,5-pentanetricarboxylic acid 1,2,3,4-cyclopentanetetracarboxylic acid and biphenyl-3,4,3',4'-tetracarboxylic acid, as well as polyhydric alcohols such as pentaerythritol, glycerol, trimethylolpropane, 1,2,6-hexanetriol, sorbitol and 1,1,4,4-tetrakis(hydroxymethyl)cyclohexane.

It is desired that the lowly crystalline PET resin used for the intermediate layer of the present invention has an intrinsic viscosity in a range of 0.60 to 1.40 dL/g as measured by using a mixed solvent of phenol and tetrachloroethane at a weight ratio of 1:1 at a temperature of 30°C.

[Barrier polyamide resin]

The gas-barrier aromatic polyamide type resin that constitutes the intermediate layer of the present invention has excellent gas-barrier property, a refractive index in a range of 1.57 to 1.59 before it is stretched, a refractive index in a range of 1.57 to 1.60 after it is stretched under the condition of the above-mentioned formula (1), and a difference of refractive index represented by the above-mentioned formula (1) in a range of not larger than 0.03 when it is used in combination with the lowly crystalline PET resin described above.

As the aromatic polyamide resin having the above-mentioned excellent gas-barrier property, there is, desirably, used a xylene group-containing polyamide and, specifically, a polyamide obtained from a diamine component that chiefly comprises an m-xylylenediamine and/or a p-xylylenediamine and from an aliphatic dicarboxylic acid and/or an aromatic dicarboxylic acid.

Concretely, there can be exemplified homopolymers such as polymetaxylyleneadipamide, polymetaxylylenesebacamide, polymetaxylylenesuberamide, polyparaxylylenepimelamide and polymetaxylyleneazelamide; copolymers such as metaxylylene/paraxylyleneadipamide copolymer, metaxylylene/paraxylylenepimelamide copolymer, metaxylylene/paraxylylenesebacamide copolymer and metaxylylene/paraxylyleneazelamide copolymer; or copolymers obtained by copolymerizing a homopolymer or a copolymer component thereof with an aliphatic diamine such as hexamethylenediamine, an alicyclic diamine such as piperadine, an aromatic diamine such as para-bis(2-aminoethyl)benzene, an aromatic dicarboxylic acid such as terephthalic acid, a lactam such as $\varepsilon$-caprolactam, an $\omega$-aminocarboxylic acid such as 7-aminoheptanoic acid or aromatic aminocarboxylic acid such as para-aminomethylbenzoic acid.

These aromatic polyamides, too, should have molecular weights large enough for forming a film, and should have relative viscosities of not less than 1.1 and, specifically, not less than 1.5 as measured in concentrated sulfuric acid (concentration of 1.0 g/dl) at 30°C.

Further, if an oxygen-absorbing component that will be described later is to be added, it is desired to use a polyamide resin that is obtained by the polycondensation reaction of a dicarboxylic acid component with a diamine component comprising chiefly a xylylenediamine having a terminal amino group concentration of not less than 40 eq/$10^6$ g since there takes place no deterioration by oxidation when oxygen is absorbed.

[Other components]

In the multilayered container of the present invention, it is desired that the intermediate layer contains at least either an oxygen-absorbing component comprising an oxidizing catalyst and an oxidizing organic component, or a lamellar silicate.

The oxygen-absorbing component comprises a combination of a conventional oxidizing catalyst and an oxidizing organic component. Upon being blended with it, the intermediate layer becomes capable of shutting off or trapping oxygen that permeates into the container from the exterior thereof, or capable of trapping oxygen remaining in the container, and capable of improving preservability of the contents.

As the oxidizing organic component, there can be exemplified organic matters that can be oxidized or, concretely, butadiene, polyene oligomers or polymers modified with acid or acid anhydride, such as maleic anhydride-modified butadiene, as well as low molecular compounds having unsaturated bonds.

As the oxidizing catalyst, there can be used metal components of the Group VIII of periodic table, such as iron, cobalt, nickel and the like though not limited thereto only.

The oxidizing organic component is added in an amount of, desirably, 2 to 10 parts by weight per 100 parts by weight of the barrier polyamide resin while the oxidizing catalyst is added in an amount of, desirably, 1 to 400 ppm calculated as metal.

If there is used, as the barrier polyamide resin, a polyamide resin obtained by the polycondensation reaction of a dicarboxylic acid component with a diamine component that chiefly comprises a xylylenediamine having a terminal amino group concentration of lower than 40 eq/$10^6$ g, then only the oxidizing catalyst may be added thereto; i.e., the obtained barrier polyamide resin by itself exhibits barrier property as well as oxygen-absorbing property.

The intermediate layer blended with the lamellar silicate exhibits further improved gas-barrier property due to the detouring effect of the lamellar silicate.

As the lamellar silicate, there can be exemplified mica, vermiculite and smectite. Preferred lamellar silicates are those of the 2-octaheral type or the 3-octahedral type having electric charge densities of 0.25 to 0.6. As the 2-octahedral type ones, there can be exemplified montmorillonite, beidellite and nontronite. As the 3-octahedral type ones, there can be exemplified hectorite and saponite. The lamellar silicate is preferably the one that is swollen by being treated with an organificating agent such as quaternary ammonium salt. As the quaternary ammonium salt, there can be used a quaternary ammonium salt having at least one or more alkyl groups with not less than 12 carbon atoms or, concretely, trimethyldodecyl ammonium salt or trimethyltetradecyl ammonium salt.

The lamellar silicate is added in an amount of, desirably, 1 to 10 parts by weight and, specifically, 1 to 8 parts by weight per 100 parts by weight of the barrier polyamide resin.

The above oxygen-absorbing component and/or the lamellar silicate may be added to either the lowly crystalline PET resin or the barrier polyamide resin, but are, particularly preferably, added to the barrier polyamide resin. That is, if the lowly crystalline PET resin that serves as the matrix of the intermediate layer contains the oxygen-absorbing component and/or the lamellar silicate, then the formability becomes poor and interlayer peeling may take place. Therefore, these components are made present in the dispersion phase that comprises the barrier polyamide resin in order to suppress a decrease in the formability and in the interlayer adhesive force.

The lowly crystalline PET resin or the barrier polyamide resin that constitutes the intermediate layer can be blended with known blending agents for resins, such as deoxidizing agent, filler, coloring agent, heat stabilizer, weathering stabilizer, antioxidant, anti-aging agent, photo stabilizer, ultraviolet ray absorber, antistatic agent, lubricant like metal soap or wax, and resin or rubber for reforming according to known recipe within ranges in which they do not impair the object of the invention.

When the above-mentioned components are added to the lowly crystalline PET resin or the barrier polyamide resin that constitutes the intermediate layer, it is desired that the amounts of the components that are added are smaller than the amount of the lowly crystalline PET resin or the aromatic polyamide resin that serves as the base material so that the refractive index is affected little. In this case, a difference of the refractive index represented by the above formula (1) may be measured from a plate obtained by injection-forming the lowly crystalline PET resin or the aromatic polyamide resin that serves as the base material after it has been monoaxially stretched into 3 times.

Further, when the above oxygen-absorbing component and/or the lamellar silicate are to be added to the intermediate layer, it is desired that these components are added to the barrier polyamide resin in advance, and then the barrier polyamide resin is pelletized to prepare a master batch. Namely, it is desired that the master batch and the lowly crystalline PET resin are blended together in such amounts that the amount of the lowly crystalline PET resin and the amount of the barrier polyamide resin are at the above-mentioned ratio thereby to prepare a resin composition for forming the intermediate layer.

(Multilayered structure)

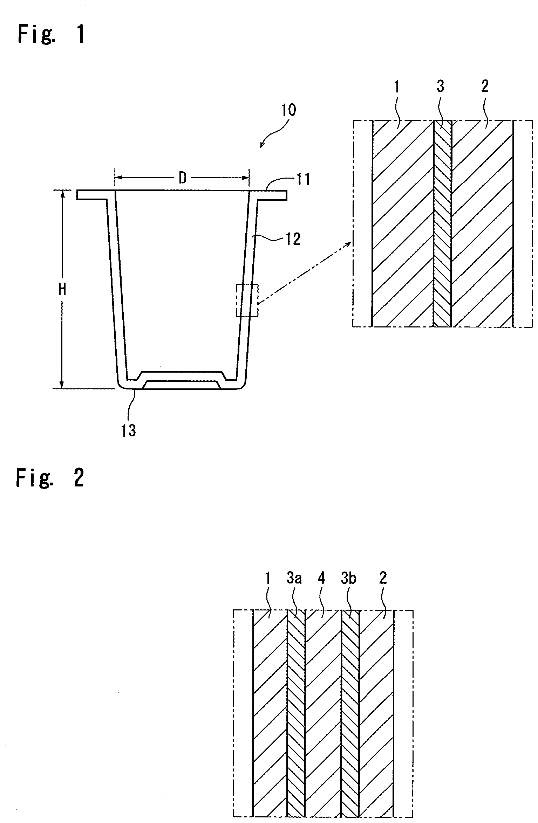

The multilayered container of the present invention can employ various kinds of layer constitutions so far as the multilayered container has the inner and outer layers of the PET resin, and at least one intermediate layer comprising the above-mentioned lowly crystalline PET resin and the barrier polyamide resin. As shown in Fig. 1, the multilayered container can assume the two-kind-three-layer constitution including a barrier intermediate layer 3 comprising the lowly crystalline PET resin and the barrier polyamide resin between the inner layer 1 and the outer layer 2 of the PET resin. Or as shown in Fig. 2, the multilayered container can also assume the two-kind-five-layer constitution including the inner layer 1 and the outer layer 2 of the PET resin, and two barrier intermediate layers 3a and 3b comprising the lowly crystalline PET resin and the barrier polyamide resin between the inner layer 1 of the PET resin and the intermediate layer 4 of the PET resin and between the outer layer 2 of the PET resin and the intermediate layer 4 of the PET resin.

In the present invention, the interlayer adhesiveness has been improved among the inner layer, outer layer and intermediate layer. In producing the multilayered containers, therefore, there is no need of interposing the adhesive resin among the resin layers. The adhesive resin, however, may be interposed among the resin layers, as a matter of course. As the adhesive resin, there can be used a thermoplastic resin that has, on a main chain or side chains thereof, a carbonyl (-CO-) group due to carboxylic acid, carboxylic anhydride, carboxylate, carboxylic acid amide or carboxylic acid ester at a concentration of 1 to 700 milliequivalents (meq)/100 g of the resin and, specifically, 10 to 500 meq/100 g of the resin. Preferred examples of the adhesive resin include ethylene-acrylic acid copolymer, ionically crosslinked olefin copolymer, maleic anhydride-grafted polyethylene, maleic anhydride-grafted polypropylene, acrylic acid-grafted polyolefin, ethylene-vinyl acetate copolymer and copolymerized polyester.

It is, further, desired that the weight ratio of the intermediate layer is in a range of 1 to 25% by weight and, specifically, 3 to 25% by weight in the whole container. If the weight ratio of the intermediate layer is smaller than the above range, the gas-barrier property cannot be obtained to a sufficient degree. If the weight ratio of the intermediate layer is larger than the above range, on the other hand, it becomes disadvantageous in economy and, besides, it may become difficult to maintain mechanical strength and the like of the containers.

As described above, further, if there are made present a plurality of intermediate layers comprising the lowly crystalline PET resin and the barrier polyamide resin, it is desired that the weight ratio of the intermediate layers as a whole lies within the above-mentioned range.

(Method of production)

The multilayered container of the present invention can be produced by a conventional heat-forming method. Namely, the multilayered precursor having a multilayered structure is formed, i.e., a multilayered sheet or a multilayered preform is formed.

The multilayered sheet can be produced by a conventional method. Desirably, the multilayered sheet is produced by co-extruding the PET resin for constituting the inner and outer layers and a resin composition for forming the intermediate layer comprising the lowly crystalline PET resin and the barrier polyamide resin into the above-mentioned multilayered structure through a multilayered multiplexing dies. The multilayered sheet can also be produced by a lamination technology such as sandwich lamination, extrusion-coating or the like method.

The multilayered preform can also be formed in the shape of an inverted circular truncated cone having a flange portion and a bottom portion, the distance from the flange portion to the center of the bottom portion being small in the axial direction, by compression-forming a molten resin mass that includes the resin composition for forming the intermediate layer as a core layer and the PET resin for forming the inner and outer layers as shell layers. In the multilayered preform, it is also allowable not to form the multilayered structure in a portion that becomes the flange portion that is not stretched in the heat-forming. In this case, the container as a whole becomes transparent.

Next, through the heat-forming, the multilayered precursor that is obtained is formed into a multilayered container of the shape of a cup. The heat forming can be a conventional heat forming, such as compressed air forming, vacuum forming, vacuum/compressed air forming combining the vacuum forming with the compressed air forming, or plug-assist forming that executes the vacuum and/or the compressed air forming while using a plug or after having used the plug. The invention, however, uses, particularly preferably, the plug-assist forming method.

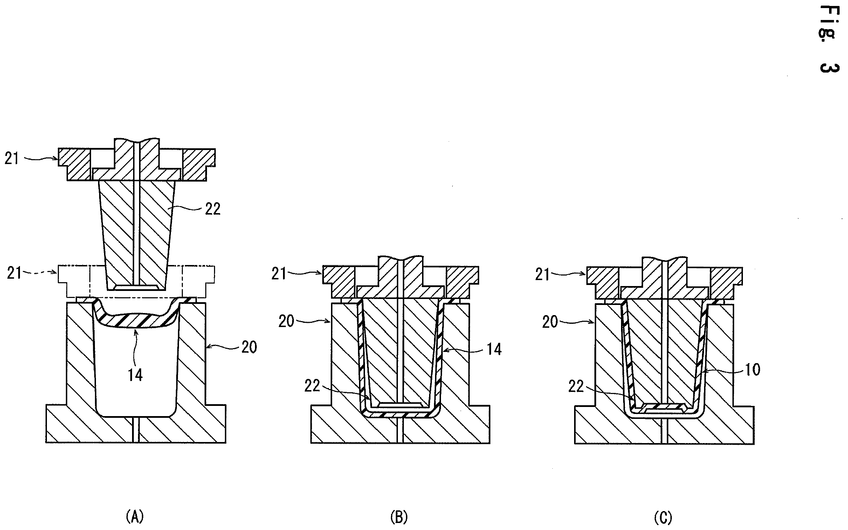

Reference is now made to Fig. 3 which illustrates a method of producing the multilayered container according to the present invention. Fig. 3(A) is a view illustrating the step in which a clamp mold 21 is caused to descend before a plug 22 descends to clamp a multilayered precursor 14. Fig. 3(B) is a view illustrating the step of stretching and the step of heat set. In Fig. 3(B), the plug 22 descends to stretch the multilayered precursor 14. Here, due to the compressed air from the plug 22 and/or due to the vacuuming from a female mold 20, the multilayered precursor 14 is formed in the shape of the female mold 20 and is heat-set. Next, referring to Fig. 3(C), the multilayered precursor 14 that is being formed due to the compressed air from the plug 22 and/or due to the vacuuming from the female mold 20, shrinks back and is formed in the shape of a plug member. There is thus formed a cup-type multilayered container 10 which is the finally formed article. After cooled, the clamp member is caused to ascend, and the finally formed article is taken out.

In the concrete embodiment of Fig. 3, the multilayered precursor 14 is stretched by the plug in the axial direction of the container and is, thereafter, heat-set by the inner surface of the female mold. Here, however, the cup-type multilayered container can also be formed by stretching the multilayered precursor 14 by using the plug in the axial direction of the container, heat-setting it in a state where the plug is being descended down and, thereafter, imparting the shape of the female mold by using the compressed air.

The temperature for heat set is desirably in a range of 60 to 220°C though not limited thereto only, and the multilayered precursor is desirably brought in contact with the female mold or the plug for 0.1 to 10 seconds.

The multilayered container of the present invention has the shape of a cup as shown in Fig. 1, though not limited thereto only, and includes a flange portion 11, a side surface 12 and a bottom portion 13. In the diagramed embodiment, further, the central bottom portion 15 is dented inward of the container. Not being limited thereto only, however, the bottom portion may be flat as a matter of course.

The multilayered container of the present invention, particularly desirably, assumes the shape of a cup as shown in Fig. 1 and has a ratio H/D of the height (H) of the container and the diameter (D) of the opening of the container of not less than 1.0 and, specifically, in a range of 1.5 to 2.0. The refractive indexes of the lowly crystalline PET resin and the barrier polyamide resins of the intermediate layer after stretched can then be brought close to each other, and the value ΔRI can be brought to lie in the above-mentioned range. It is thus made possible to obtain the cup-type multilayered container having excellent transparency with the haze of not more than 5% in the side surface of the container. The most desired shape of the cup is that the bottom and the opening are of a circular shape. Not being limited thereto only, however, the bottom and/or the opening may assume a rectangular shape. The cup-type containers do not exclude the so-called tray shape so far as their side surfaces are stretched in the axial direction.

EXAMPLES

1. Materials.

Described below are the materials used in the Examples.

(1) Ethylene terephthalate type polyester resin. PET: Isophthalic acid (copolymerization ratio = 1.8 mol%), diethylene glycol (copolymerization ratio = 2.3 mol%) copolymerized polyethylene terephthalate resin (5015w: manufactured by Shinkong Synthetic Fibers Co., IV = 0.83).
(2) Lowly crystalline ethylene terephthalate type polyester resin.

APET1: Cyclohexanedimethanol (copolymerization ratio = 30 mol%), diethylene glycol (copolymerization ratio = 2.3 mol%) copolymerized polyethylene terephthalate resin (S2008: manufactured by SK Chemicals Co., Ltd. IV = 0.78).
APET2: Isophthalic acid (copolymerization ratio = 15 mol%), diethylene glycol (copolymerization ratio = 3.6 mol%) copolymerized polyethylene terephthalate resin (IV = 0.70).

(3) Aromatic polyamide.
PA: Polymetaxylyleneadipamide resin (S6007: manufactured by Mitsubishi Gas Chemical Company, Inc.).
(4) Transition metal catalyst.

Oxidizing catalyst: Cobalt neodecanoate (DICNATE 5000: manufactured by DIC Corporation.)

2. Preparation of the multilayered containers.

By using a machine for forming a multilayered sheet, there was prepared a multilayered sheet having a desired layer constitution. Thereafter, by using a plug-assist vacuum/compressed air forming machine, a cup was formed and a multilayered container was prepared.

3. Preparation of master batch resin pellets.

By using a biaxial extruder with granulation equipment (TEM26SS: manufactured by TOSHIBA MACHINE CO., LTD.), a stranded extrusion product was obtained by mixing and kneading the base resin and various constituent components together, was cooled as it was conveyed by a conveyer, and was granulated by using a pelletizer to obtain a pelletized master batch resin.

The constituent components were externally added to the pellets of the base resin.

4. Forming the injection-formed plate.

The above-mentioned materials that have been dried were fed into the hopper of an injection-forming machine (NN75JS: manufactured by Niigata Engineering Co., Ltd.). By setting the temperature of the barrel at 260 to 280°C, the materials were injection-formed into a plate of a size of 90 x 90 x 1.5 mm.

5. Forming the monoaxially stretched sheet.

By using a biaxially stretching testing machine (x6H-S: manufactured by Toyo Seiki Seisaku-sho, Ltd.), the above injection-formed plate was monoaxially stretched under the following conditions.

Temperature in the chamber: 100°C

Heating time prior to stretching: 2 minutes and 30 seconds

Stretching method-stretching ratio: monoaxially stretched into 3 times

Rate of stretching: 10 m/min.

6. Measurements.

(1) Measuring the haze in the side surface of the container.

The side surface of the multilayered container was cut out and was measured for its haze by using a color computer (SM-4 : manufactured by Suga Test Instruments Co., Ltd.). The measured value was an average value from three arbitrary points.

(2) Measuring the oxygen-barrier property.

One milliliter of distilled water was put into the multilayered container, and the mouth portion thereof was heat-sealed with a lid member comprising amorphous polyester (inner layer)/aluminum foil/polyester (outer layer) in a nitrogen atmosphere. The multilayered container was stored under the conditions of 23°C50%RH for 8 weeks. The oxygen concentration in the container was measured by a gas chromatography (GC-14A: manufactured by Shimadzu Corporation), and the amount of oxygen that has permeated through was calculated. The ratio of the amount of oxygen that has permeated through the single-layered container and the amount of oxygen that has permeated through the sample was calculated as oxygen barrier property (BIF: amount of oxygen that has permeated through the single-layered container/amount of oxygen that has permeated through the sample).

(3) Measuring the refractive index after monoaxially stretched into 3 times.

From the stretched sheet obtained as described above, a sample of a size of 30 x 10 mm was cut out. By using the Abbes' refractometer having an eyepiece with a polarizer plate (NAR-1T: manufactured by Atago Co., Ltd.), the sample was measured for its refractive index in the direction in which it was stretched.

(4) Interlayer peeling test.

By using a cutter knife, the side surface of the container was incised over 30 mm to evaluate the appearance. From the incised portion, it was confirmed with the eye if the interlayer peeling was taking place.

(Example 1)

A multilayered sheet was prepared by using the PET to form the inner and outer layers, dry-blending the APET1 and the PA together at a ratio of 70:30 to form the intermediate layer, and setting the temperature of the forming machine at 280°C.
The sheet was so prepared that a thickness thereof was 1.2 mm and that the intermediate layer was 10wt% of the whole sheet. Next, the sheet was heated again at 100°C to form a cup, and from which a multilayered container was prepared having a drawing ratio of 1.67 and a capacity of 350 cc. The obtained container was measured for its haze in the side surface, occurrence of interlayer peeling and oxygen-barrier ratio according to the methods described above.
Further, the dried APET1 was fed into the hopper of the injection-forming machine and was injection-formed while setting the temperature of the barrel at 280°C to obtain an injection-formed plate of a size of 90 x 90 x 1.5 mm. The injection-formed plate was monoaxially stretched into 3 times by the method described above to obtain a stretched sheet. The PA, too, was similarly injection-formed into a plate and was stretched into a sheet. Here, however, the temperature of the barrel was set at 260°C. The stretched sheets were measured for their refractive indexes by the method described above to calculate their refractive indexes and a difference ΔRI of the refractive index.

(Example 2)

By using the APET1 as the base material, there was prepared, by the above method, a pelletized master batch resin (MB1) containing the oxidizing catalyst in an amount of 500 ppm calculated as metal in the resin composition. Here, the temperature of the barrel was maintained at 280°C.
By using the multilayered sheet-forming machine, there were prepared a multilayered container and a stretched sheet in the same manner as in Example 1 but forming the intermediate layer by using a dry blend of the MB1 and the PA at a ratio of 70:30. They were then measured for their properties.

(Example 3)

A multilayered container was prepared in the same manner as in Example 1 but using the APET2 instead of the APET1, and was measured for its properties.
Further, a stretched sheet was prepared in the same manner as in Example 1 but feeding the APET2 that has been dried into the hopper of the injection-forming machine and forming an injection-formed plate thereof. The stretched sheet that was prepared was measured for its refractive index.

(Comparative Example 1)

A single-layered sheet comprising only the PET was prepared by maintaining the temperature of the forming machine at 280°C. In other respects, the process was carried out in the same manner as in Example 1 to prepare a multilayered container which was then measured for its properties.

(Comparative Example 2)

A multilayered sheet was prepared by using a dry blend of the PET and the PA at a ratio of 70:30 to form the intermediate layer. In other respects, the process was carried out in the same manner as in Example 1 to prepare a multilayered container which was then measured for its properties. Here, however, the container was opaque and was not measured for its oxygen-barrier property.
Further, a stretched sheet was prepared in the same manner as in Example 1 but feeding the PET that has been dried into the hopper of the injection-forming machine and forming an injection-formed plate thereof. The stretched sheet that was prepared was measured for its refractive index.

(Comparative Example 3)

A multilayered container and a stretched sheet were prepared in the same manner as in Example 1, the multilayered container, however, being drawn at a ratio of 0.5 and having a capacity of 110 cc. The multilayered container and the stretched sheet were measured for their properties. Here, however, the container was opaque and was not measured for its oxygen-barrier property.

## Table 1

| | Layer constitution | Ratio of intermediate layer (wt.%) | Copolymerizable components of lowly crystalline PET (mol%) | | | Aromatic polyamide type gas-barrier resin | Oxidizing catalyst | Drawing ratio |
|---|---|---|---|---|---|---|---|---|
| | | | *1 | *2 | *3 | Blended ratio in the intermediate layer (wt%) | Blended ratio in the intermediate layer (calculated as metal), ppm | |
| Ex. 1 | 2-kind-3-layer | 10 | 0.0 | 30 | 2.3 | 30 | 0 | 1.67 |
| Ex. 2 | 2-kind-3-layer | 10 | 0.0 | 30 | 2.3 | 30 | 350 | 1.67 |
| Ex. 3 | 2-kind-3-layer | 10 | 15.0 | 0 | 3.6 | 30 | 0 | 1.67 |
| Comp. Ex. 1 | single layer | | | | | | 0 | 1.67 |
| Comp. Ex. 2 | 2-kind-3-layer | 10 | 1.8 | 0 | 2.3 | 30 | 0 | 1.67 |
| Comp. Ex. 3 | 2-kind-3-layer | 10 | 0.0 | 30 | 2.3 | 30 | 0 | 0.5 |

*1: Isophthalic acid, *2: Cyclohexanedimethanol, *3: Diethylene glycol

EP 3 318 501 B1

Table 1 (continued)

| | Refractive index after stretched by 1 x 3 times | | Interlayer peeling | Oxygen-barrier property | Haze (%) |
| ΔRI | $RI_A$ | $RI_E$ | | BIF (ratio of the amount of oxygen permeated relative to that of single-layered container) | Cup wall portion |
|---|---|---|---|---|---|
| 0.002 | 1.588 | 1.586 | no | 1.22 | 4.3 | Ex. 1 |
| 0.002 | 1.588 | 1.586 | no | 15.01 | 4.7 | Ex. 2 |
| 0.019 | 1.588 | 1.607 | no | 1.29 | 4.3 | Ex. 3 |
| | | | | 1 | 2.3 | Comp. Ex. 1 |
| 0.057 | 1.588 | 1.645 | no | | 9.3 | Comp. Ex. 2 |
| 0.002 | 1.588 | 1.586 | no | | 8.5 | Comp. Ex. 3 |

Industrial Applicability:

The cup-type multilayered container of the present invention has excellent transparency, gas-barrier property and interlayer adhesiveness, and can be favorably used as a container for containing contents that are subject to be

13

affected by oxygen as well as contents that require excellent preservability.

Description of Reference Numerals:

| | |
|---|---|
| 1 | inner layer |
| 2 | outer layer |
| 3 | intermediate barrier layer |
| 4 | intermediate layer |
| 10 | cup-type multilayered container |
| 11 | flange |
| 12 | side surface |
| 13 | bottom portion |
| 14 | multilayered precursor |
| 20 | female mold |
| 21 | plug |
| 22 | clamp member |

**Claims**

1. A multilayered container obtainable by heat-forming a multilayered precursor that includes inner and outer layers of an ethylene terephthalate type polyester resin, and at least one intermediate layer of at least a lowly crystalline ethylene terephthalate type polyester resin and a gas-barrier aromatic polyamide resin, wherein
a difference of refractive index ($\triangle$RI) between the lowly crystalline ethylene terephthalate type polyester resin and the gas-barrier aromatic polyamide resin represented by the following formula,

$$\triangle RI = \left| RI_E - RI_A \right|$$

wherein $RI_E$ and $RI_A$ are refractive indexes of injection-formed plates made, respectively, from said lowly crystalline ethylene terephthalate type polyester resin and said gas-barrier aromatic polyamide resin after they have been monoaxially stretched into 3 times, as measured by cutting out a sample of a size of 30 x 10 mm and using the Abbes' refractometer having an eyepiece with a polarizer plate (NAR-1T: manufactured by Atago Co., Ltd.) to measure the sample for its refractive index in the direction in which it was stretched,
is not more than 0.03,
a haze in a side surface of the container is not more than 5% as measured using a color computer (SM-4: manufactured by Suga Test Instruments Co., Ltd.) and taking an average value from three arbitrary points,
the lowly crystalline ethylene terephthalate type polyester resin is an ethylene terephthalate type polyester resin that contains 7.5 to 15 mol% of isophthalic acid in its dicarboxylic acid component or 15 to 30 mol% of cyclohexanedimethanol in its diol component, and
the multilayered container is obtainable by heat-forming said multilayered precursor such that a drawing ratio H/D (H: height of a cup, D: diameter of a opening of the cup) is not less than 1.0.

**Patentansprüche**

1. nspruch 1] Mehrschichtiger Behälter, der durch ein Warmformen eines mehrschichtigen Ausgangsmaterial erhalten werden kann, der innere und äußere Schichten eines Polyesterharzes des Ethylenterephtalat-Typs und wenigstens eine Zwischenschicht wenigstens eines niederkristallinen Polyesterharzes des Ethylenterephtalat-Typs und einem aromatischen Gasbarriere-Polyamidharz enthält, wobei
ein Unterschied im Brechungsindex ($\triangle$RI) zwischen dem niederkristallinen Polyesterharz des Ethylenterephthalat-Typs und dem aromatischen Gasbarriere-Polyamidharz, der durch die folgende Formel dargestellt wird:

$$\triangle RI = \left| RI_E - RI_A \right|$$

wobei $RI_E$ und $RI_A$ Brechungsindizes von spritzgussgeformten Platten sind, die aus dem niederkristallinen Polyesterharz des Ethylenterephthalat-Typs beziehungsweise dem aromatischen Gasbarriere-Polyamidharz hergestellt sind, nachdem sie monoaxial in das 3-fache gedehnt wurden, wie durch ein Ausschneiden einer Probe einer Größe von 30 x 10 mm und unter Verwendung des Abbes-Refraktometers mit einem Okular mit einer polarisierten Platte (NAR-1T: hergestellt durch Atago Co., Ltd.) gemessen, um die Probe auf ihren Brechungsindex in der Richtung zu messen, in der sie gezogen wurde,

nicht mehr als 0,03 beträgt,

eine Eintrübung in einer Seitenoberfläche des Behälters nicht mehr als 5 % beträgt, wie unter Verwendung eines Farbcomputers (SM-4: hergestellt durch Suga Test Instruments Co., Ltd.) und dem Ablesen eines Durchschnittswerts von drei arbiträren Punkten gemessen,

das niederkristalline Polyesterharz des Ethylenterephthalat-Typs ein Polyesterharz des Ethylenterephthalat-Typs ist, das 7,5 bis 15 Mol-% Isophthalsäure in seiner Dicarbonsäurekomponente oder 15 bis 30 Mol-% Cyclohexandimethanol in seiner Diolkomponente enthält, und

der mehrschichtige Behälter durch das Warmformen des mehrschichtigen Ausgangsmaterials erhalten werden kann, sodass ein Ziehverhältnis H/D (H: Höhe eines Bechers, D: Durchmesser einer Öffnung des Bechers) nicht weniger als 1,0 beträgt.

## Revendications

1. Récipient multicouche pouvant être obtenu par formage à chaud d'un précurseur multicouche qui comprend des couches intérieure et extérieure d'une résine de polyester de type éthylène téréphtalate, et au moins une couche intermédiaire d'au moins une résine polyester de type éthylène téréphtalate faiblement cristallin et une résine polyamide aromatique à barrière aux gaz, dans lequel

   une différence d'indice de réfraction (ΔRI) entre la résine polyester de type éthylène téréphtalate faiblement cristallin et la résine polyamide aromatique à barrière aux gaz représentée par la formule suivante, $\Delta RI = |RI_E - RI_A|$

   dans lequel $RI_E$ et $RI_A$ sont des indices de réfraction de plaques formées par injection faites, respectivement, à partir de ladite résine polyester de type éthylène téréphtalate faiblement cristallin et de ladite résine polyamide aromatique à barrière aux gaz après avoir été étirées monoaxialement en 3 fois, comme mesuré en découpant un échantillon d'une taille de 30 x 10 mm et utilisant le réfractomètre d'Abbes ayant un oculaire avec une plaque polarisante (NAR-1T: fabriqué par Atago Co., Ltd.) pour mesurer l'échantillon pour son indice de réfraction dans la direction dans laquelle il était étiré, ne dépasse pas 0,03,

   un voile sur une surface latérale du récipient ne dépasse pas 5%, mesuré à l'aide d'un ordinateur couleur (SM-4 : fabriqué par Suga Test Instruments Co., Ltd.) et prenant une valeur moyenne à partir de trois points arbitraires,

   la résine polyester de type éthylène téréphtalate faiblement cristallin est une résine polyester de type éthylène téréphtalate qui contient 7,5 à 15% en moles d'acide isophtalique dans son composant acide dicarboxylique ou 15 à 30% en moles de cyclohexane d'édiméthanol dans son composant diol, et

   le récipient multicouche peut être obtenu en formant à chaud ledit précurseur multicouche de telle sorte qu'un rapport d'étirage H / D (H : hauteur d'une tasse, D : diamètre d'une ouverture de la tasse) ne soit pas inférieur à 1,0.

Fig. 1

Fig. 2

Fig. 3

(A)   (B)   (C)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004142444 A
- JP 2005059859 A
- WO 2010035654 A
- JP 5296385 B